# EUROPÄISCHE PATENTSCHRIFT

(11) **EP 1 997 716 B1**
(45) Veröffentlichungstag und Bekanntmachung des Hinweises auf die Patenterteilung: **30.03.2011**
(21) Anmeldenummer: 08009876.7
(22) Anmeldetag: 30.05.2008
(51) Int. Cl.: B62D 21/15, B62D 29/04, B62D 25/04, F16F 7/12

(54) **Faserverbundwerkstoffprofil und Kraftfahrzeugscheibenrahmen**
Fibre composite material profile and motor vehicle window frame
Profilé en matière composite fibreuse et cadre de vitre de véhicule automobile

(30) Priorität: 01.06.2007 DE 102007025631
(43) Veröffentlichungstag der Anmeldung: 03.12.2008
(73) Patentinhaber: AUDI AG, 85045 Ingolstadt (DE)
(72) Erfinder: Schneidewind, Thomas, 89312 Günzburg (DE); Gerbrand, Jürgen, 71737 Kirchberg (DE); Durst, Karl, 91790 Thalmannsfeld (DE)
(74) Vertreter: Patzelt, Heike Anna Maria

(56) Entgegenhaltungen:
- EP-A- 1 553 323
- WO-A-2004/098820
- DE-A1- 4 317 738

## Beschreibung

Die Erfindung betrifft ein Faserverbundwerkstoffprofil und einen zugehörigen Scheibenrahmen für ein Kraftfahrzeug.

Aus dem Stand der Technik ist der Einsatz von Stahl als Werkstoff im Karosseriebau insbesondere für Kraftfahrzeugscheibenrahmen bekannt. Um eine Zunahme des Fahrzeuggewichts in Folge höherer Sicherheitsanforderungen bezüglich der Steifigkeit der Fahrgastzellen von Kraftfahrzeugen und ihre Deformationseigenschaften verhindern zu können, werden in bekannter Weise Leichtbauwerkstoffe, wie zum Beispiel Aluminium, als Werkstoffe für Kraftfahrzeugscheibenrahmen verwendet. Sowohl Stahl als auch Aluminium ermöglichen als Werkstoffe für den Kraftfahrzeugscheibenrahmen eine hohe Bruchdehnung ohne Versagen der Struktur, so dass insbesondere ein seitlicher Fahrzeugscheibenrahmen Kräfte aufnehmen und auf untere Karoseriestrukturen weiterleiten kann, die bei einem Unfall auf das Fahrzeugdach wirken können. Dies erhöht die Widerstandsfähigkeit des Fahrzeugdaches gegen Eindrückung.

Zudem ist der Einsatz von Faserverbundwerkstoffen als Leichtbauwerkstoffe aus dem Stand der Technik bekannt, die beispielsweise mit einem so genannten RTM-Verfahren (RTM: Resin Transfer Moulding bzw. Harz-Injektionsverfahren) hergestellt werden. Die Verstärkungsfasern können beispielsweise als Gewebe, Gewirke, Vliese, Gitter Matten usw. ausgeführt sein, die beispielsweise aus Glas-, Kunststoff-, Natur- und/oder Kohlefasern hergestellt sind. Für Sandwich-Konstruktionen können Kernwerkstoffe wie Polyurethanschaum, PVC-Schaum, Balsaholz usw. verwendet werden. Neben den verschiedenen Verstärkungsfaserwerkstoffen und Sandwichwerkstoffen können beim RTM-Verfahren auch unterschiedliche Harzsysteme, wie z.B. Polyester-, Venylester-, Epoxid- oder Phenol-Harze, verwendet werden. Das RTM-Verfahren ermöglicht insbesondere die Herstellung von Teilen mit komplexer Geometrie.

In der Gebrauchsmusterschrift DE 299 24 726 U1 wird ein Verbundbauteil für Fahrzeugkarosserien beschrieben. Das beschriebene Verbundbauteil definiert abschnittsweise die Außenfläche des Fahrzeugs und ist insbesondere als großflächiges Verbundbauteil in Form eines Fahrzeugdachs, einer Tür, einer Klappe oder eines Deckels ausgeführt. Das beschriebene Verbundbauteil umfasst eine vor dem Schäumen separat tiefgezogene Außenhaut und eine auf der Innenseite der Außenhaut aufgeschäumte Kunststoffschicht.

Die tiefgezogene Außenhaut ist an den Rändern rahmenlos ausgebildet und mit einer umlaufenden Aufkantung versehen. Zudem ist über den gesamten Flächenbereich der Außenhaut eine an sich nicht steife Armierung aus ungeordneten Fasern, insbesondere Glasfasern, vorgesehen, mit denen der Kunststoff beladen ist, wobei die ungeordneten Fasern den Elastizitätsmodul der geschäumten Kunststoffschicht erhöhen. Die Armierung umfasst beispielsweise nichteigensteife bzw. biegeschlaffe Gewebe, Gewirke, Vliese, Gitter Matten usw., die beispielsweise aus Glas-, Kunststoff- und/oder Kohlefasern hergestellt sind.

In der Patentschrift DE 43 17 738 C2 wird ein aus einem faserverstärkten Verbundmaterial gefertigter Energieabsorber beschrieben, der als rohrförmiger Körper mit kreisringförmigem Querschnitt mit konstantem Innendurchmesser ausgebildet ist, wobei die Belastungsaufnahme im Wesentlichen in Axialrichtung des Körpers erfolgt. Die Fasern des Energieabsorbers sind annähernd senkrecht zur Axialrichtung des Körpers gewickelt und mit Harz getränkt, wobei die Querschnittsfläche des Körpers in Axialrichtung nicht konstant ist. So steigt der Außendurchmesser des Körpers in Axialrichtung in wenigstens zwei Stufen schrittweise an, so dass ein dünner Abschnitt und ein dicker Abschnitt gebildet werden, und dass die Endfläche eines Endbereichs des dünnen Abschnitts einen Querschnittsflächeninhalt in einer Ebene senkrecht zur Axialrichtung des rohrförmigen Körpers hat, der kleiner als 2/3 des Querschnittflächeninhalts des Abschnitts nahe der Verbindung zwischen dem dünnen Abschnitt und dem dicken Abschnitt ist und der Querschnittsflächeninhalt des Abschnitts in Richtung zur Mitte des dünnen Abschnitts hin kontinuierlich ansteigt.

In der gattungsgemäßen OffenlegungsschriftWO 2004/098820 A1 werden deformierbare Elemente beschrieben, die aus Verbundwerkstoffen hergestellt werden. Die beschriebenen deformierbaren Verbundwerkstoffelemente werden als Crashelemente in Fahrzeugen eingesetzt. Für den Einsatz als Seitenaufprallschutzelement weist ein solches Verbundwerkstoffelement an seinen Enden an mindestens einer Seite jeweils mindestens ein Paar von definierten äußeren Sollfehlstellen auf, durch die bei einer im Wesentlichen senkrecht zur Längsachse erfolgenden Krafteinwirkung eine Gesamtverformung des Verbundwerkstoffelements in Form einer parallelen Verschiebung des zwischen den mindestens zwei Sollfehlstellenpaaren angeordneten Abschnitts des Verbundwerkstoffelements vorgegeben wird. Hierbei wird die Verformung des Verbundwerkstoffelements so vorgegeben, dass die senkrecht zur Längsachse des Verbundwerkstoffelements einwirkende Crashenergie bei einem Seitenaufprall aufgenommen und abgebaut wird.

Bei einem möglichen Einsatz von Faserverbundwerkstoffen als Werkstoffe für Kraftfahrzeugscheibenrahmen, die insbesondere mit Kohlenstofffasern verstärkt sind, ergibt sich das Problem, dass aufgrund der geringeren Bruchdehnung dieser Werkstoffe bei der Aufnahme und Weiterleitung der bei einem Unfall auf das Fahrzeugdach wirkenden Kräfte ein Versagen der Struktur früher als gefordert auftreten kann.

Aufgabe der Erfindung ist es, ein Faserverbundwerkstoffprofil und einen zugehörigen Kraftfahrzeugscheibenrahmen anzugeben, die ein geringes Gewicht und eine ausreichende Bruchdehnung aufweisen und kostengünstig hergestellt werden können.

Die Erfindung löst diese Aufgabe durch Bereitstellung eines Faserverbundwerkstoffprofils mit den Merkmalen der Patentanspruchs 1, und durch einen Scheibenrahmen für ein Kraftfahrzeug mit den Merkmalen der Patentanspruchs 9.

Vorteilhafte Ausführungsformen und Weiterbildungen der Erfindung sind in den abhängigen Ansprüchen angegeben.

Erfindungsgemäß weist das Faserverbundwerkstoffprofil mindestens einen schubsteifen Bereich und mindestens einen schubschwachen Bereich auf, der mindestens eine definierte innere Sollfehlstelle und/oder mindestens ein definiertes inneres Sollfehlfeld aufweist. Der mindestens eine schubsteife Bereich und der mindestens eine schubweiche Bereich sind so angeordnet, dass die Fasern in dem mindestens einen schubweichen Bereich des Faserverbundwerkstoffprofils Orientierungswinkel von ungefähr 0° und in dem mindestens einen schubsteifen Bereich Orientierungswinkel von ungefähr +/-45° aufweisen, um zur Erhöhung der Bruchdehnung bei einer Krafteinwirkung eine Gesamtverformung des Faserverbundwerkstoffprofils vorzugeben. Durch die Unterteilung des Faserverbundwerkstoffprofils in schubsteife und schubweiche Bereiche und die Positionierung der mindestens einen inneren Sollfehlstelle und/oder des mindestens einen definierten inneren Sollfehlfeldes kann das Verhalten des Faserverbundwerkstoffprofils bei Belastung und insbesondere bei einer Überlastung in vorteilhafter Weise vorgegeben werden, wodurch die Gesamtverformbarkeit des Faserverbundwerkstoffprofils in vorteilhafter Weise zunimmt. Durch die vorliegende Erfindung können Faserverbundwerkstoffprofile so dimensioniert werden, dass in vorteilhafter Weise eine ausreichende Bruchdehnung erreicht werden kann. Das Faserverbundwerkstoffprofil kann beispielsweise als geschlossenes Hohlprofil ausgeführt werden.

Durch den Einsatz des erfindungsgemäßen Faserverbundwerkstoffprofils als Scheibenrahmen für ein Kraftfahrzeug können in vorteilhafter Weise ein geringeres Fahrzeuggewicht und dadurch ein tieferer Fahrzeugschwerpunkt erzielt werden, wodurch das Fahrverhalten bei gleich bleibendem hohen Insassenschutz verbessert werden kann. Zudem ermöglicht die Verwendung des erfindungsgemäßen Faserverbundwerkstoffprofils als Scheibenrahmen eine dünnere Ausführung der A-Säule, wodurch der Sichtwinkel in vorteilhafter Weise verbessert wird. Zudem ergeben sich durch die Verwendung des erfindungsgemäßen Faserverbundwerkstoffprofils geringerer Herstellungskosten und eine größere Designfreiheit.

In Ausgestaltung des erfindungsgemäßen Faserverbundwerkstoffprofils sind die schubsteifen Bereiche und schubschwachen Bereiche abwechselnd angeordnet. Die mindestens eine definierte innere Sollfehlstelle und/oder das mindestens eine definierte innere Sollfehlfeld in dem mindestens einen schubweichen Bereich bilden bei einer Krafteinwirkung beispielsweise einen Riss aus, der durch den mindestens einen angrenzenden schubsteifen Bereich gestoppt wird. Durch die Ausbildung von Rissen in den schubweichen Bereichen, die durch die schubsteifen Bereiche gestoppt werden, kann das maximale Kraftniveau erhöht werden, welches das Faserverbundwerkstoffprofil aufnehmen und ohne Versagen der Struktur weiterleiten kann.

In weiterer Ausgestaltung des erfindungsgemäßen Faserverbundwerkstoffprofils wird die gewünschte Gesamtverformung des Kunststoffrohres über einen Kraft-Weg-Verlauf eingestellt. Der Kraft-Weg-Verlauf kann beispielsweise durch Variieren der Wandstärke des Kunststoffrohrs und/oder der Faserorientierung und/oder der Abstände der schubsteifen Bereiche und/oder der schubweichen Bereiche angepasst werden.

Ein erfindungsgemäßer Scheibenrahmen für ein Kraftfahrzeug umfasst mindestens ein Faserverbundwerkstoffprofil, das beispielsweise als seitlicher Scheibenrahmen ausgeführt ist, wobei die auf den seitlichen Scheibenrahmen wirkende Kraft beispielsweise durch einen Überschlag des Fahrzeugs bei einem Unfall verursacht wird. Das mindestens eine Faserverbundwerkstoffprofil kann beispielsweise so ausgerichtet bzw. angeordnet werden, dass es eine maximale Bruchdehnung gegen eine zu erwartende Krafteinwirkung bei einem Unfall aufweist.

Vorteilhafte Ausführungsformen der Erfindung sind in den Zeichnungen dargestellt und werden nachfolgend beschrieben.

Dabei zeigen:
- Fig. 1: eine schematische Seitenansicht eines erfindungsgemäßen seitlichen Scheibenrahmens für ein Kraftfahrzeug, und
- Fig. 2: eine schematische Seitenansicht eines erfindungsgemäßen Faserverbundwerkstoffprofils für den Scheibenrahmen aus Fig. 1.

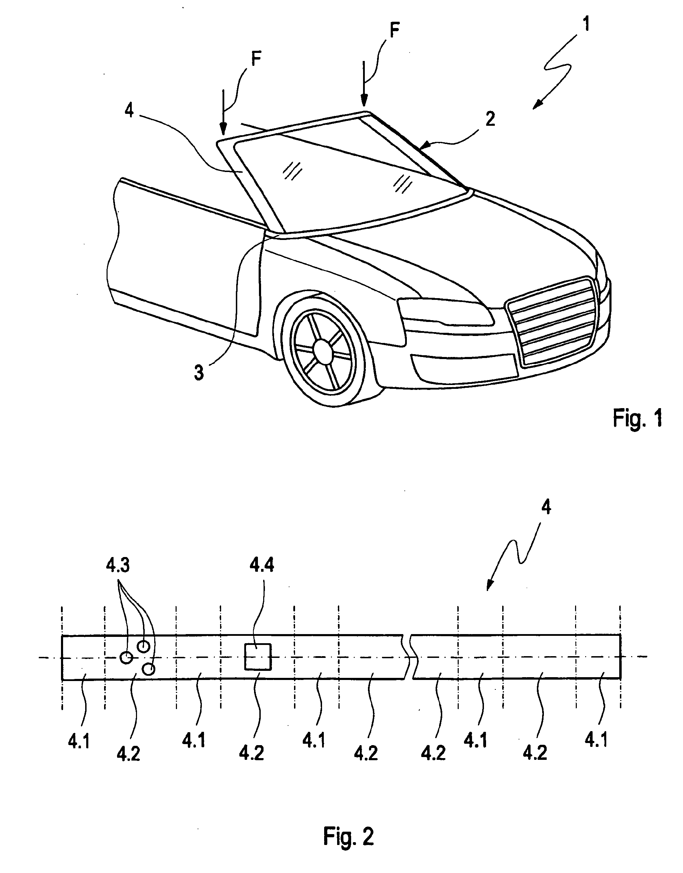

Wie aus Fig. 1 ersichtlich ist, wird ein erfindungsgemäßes Faserverbundwerkstoffprofil 4 im dargestellten Ausführungsbeispiel als vorderer seitlicher Scheibenrahmen 2 bzw. als A-Säule für ein Kraftfahrzeug 1 verwendet, das beispielhaft als Cabriolet ausgeführt ist. Das Faserverbundwerkstoffprofil 4 ist als geschlossenes Hohlprofil ausgeführt und so dimensioniert, dass es eine ausreichende Bruchdehnung aufweist, um im Falle eines Überschlags bei einem Unfall die entstehenden Kräfte F ohne Versagen der Struktur, d.h. ohne Bruch, aufzunehmen bzw. an eine untere Karosseriestruktur 3 weiterzuleiten.

Wie aus Fig. 2 ersichtlich ist, weist das Faserverbundwerkstoffprofil 4 für den Scheibenrahmen 2 eines Kraftfahrzeugs 1 mehrere abwechselnd angeordnete schubsteife Bereiche 4.1 und schubweiche Bereiche 4.2 auf. Die schubsteifen Bereiche 4.1 und die schubweichen Bereiche 4.2 sind so dimensioniert und angeordnet, dass das Faserverbundwerkstoffprofil 4 bei einer Krafteinwirkung F zur Erhöhung der Bruchdehnung in den schubweichen Bereichen 4.2 Risse ausbildet, deren Ausbreitung jeweils durch die schubsteifen Bereiche 4.1 gestoppt wird. Zu diesem Zweck können innerhalb der schubweichen Bereiche 4.2 definierte innere Sollfehlstellen 4.3 und/oder definierte innere Sollfehlfelder 4.4 angeordnet werden, die eine definierte lokale Delamination des Faserverbundwerkstoffes bewirken. Zudem können die Fasern in den schubweichen Bereichen 4.2 des Faserverbundwerkstoffprofils 4 Orientierungswinkel von ungefähr 0° aufweisen. Die Fasern in den schubsteifen Bereichen 4.1 des Faserverbundwerkstoffprofils 4 können Orientierungswinkel von ungefähr +/-45° aufweisen.

Durch eine derartige Ausführung des Faserverbundwerkstoffprofils 4 wird erreicht, dass im Falle einer Überlast in den schubweichen Bereichen 4.2 Risse ausgebildet werden, welche durch die schubsteifen Bereiche 4.1 gestoppt werden, die man als Knoten bezeichnen kann. Durch Anpassung der Knotenabstände, der Faserorientierungen und der Wandstärken des Faserverbundwerkstoffprofils 4 können verschiedene Kraft-Weg-Verläufe realisiert werden, so dass eine gewünschte Gesamtverformung des Faserverbundwerkstoffprofils 4 vorgegeben werden kann.

Durch das erfindungsgemäße Faserverbundwerkstoffprofil kann bei dessen Verwendung als Scheibenrahmen die Widerstandsfähigkeit des Fahrzeugdaches gegen Eindrückung erhöht werden, so dass bei Crashtests ohne Versagen der Struktur vergleichbare Werte wie bei der Verwendung von Stahl und/oder Aluminium als Werkstoff für den Scheibenrahmen erzielt werden können.

Somit kann durch den Einsatz des erfindungsgemäßen Faserverbundwerkstoffprofils als Scheibenrahmen für ein Kraftfahrzeug das Fahrzeuggewicht in vorteilhafter Weise bei gleich bleibendem hohen Insassenschutz weiter verringert werden. Das geringere Fahrzeuggewicht ergibt einen tieferen Fahrzeugschwerpunkt und ermöglicht eine Verbesserung des Fahrverhaltens. Zudem kann der Schreibenrahmen bzw. die A-Säule durch die Verwendung des erfindungsgemäßen Faserverbundwerkstoffprofils dünner ausgeführt werden, wodurch der Sichtwinkel in vorteilhafter Weise verbessert wird.

### BEZUGSZEICHENLISTE

- 1: Kraftfahrzeug
- 2: Scheibenrahmen
- 3: untere Karosseriestruktur
- 4: Faserverbundwerkstoffprofil
- 4.1: schubsteifer Bereich
- 4.2: schubweicher Bereich
- 4.3: innere Sollfehlstelle
- 4.4: inneres Sollfehlfeld
- F: Kraftwirkung

## Patentansprüche

1. Faserverbundwerkstoffprofil, insbesondere für einen Scheibenrahmen (2) eines Kraftfahrzeugs (1) mit mindestens einem schubsteifen Bereich (4.1) und mindestens einem schubweichen Bereich (4.2), der mindestens eine definierte innere Sollfehlstelle (4.3) und/oder mindestens ein definiertes inneres Sollfehlfeld aufweist, **dadurch gekennzeichnet, dass** der mindestens eine schubsteife Bereich (4.1) und der mindestens eine schubweiche Bereich (4.2) so angeordnet sind, dass die Fasern in dem mindestens einen schubweichen Bereich (4.2) Orientierungswinkel von ungefähr 0° und die Fasern in dem mindestens einen schubsteifen Bereich (4.1) Orientierungswinkel von ungefähr +/-45° aufweisen, um bei einer Krafteinwirkung (F) zur Erhöhung der Bruchdehnung eine Gesamtverformung des Faserverbundwerkstoffprofils (4) vorzugeben.

2. Faserverbundwerkstoffprofil nach Anspruch 1, **dadurch gekennzeichnet, dass** die schubsteifen Bereiche (4.1) und die schubweichen Bereiche (4.2) abwechselnd angeordnet sind.

3. Faserverbundwerkstoffprofil nach Anspruch 1 oder 2, **dadurch gekennzeichnet, dass** die mindestens eine definierte innere Sollfehlstelle (4.3) und/oder das mindestens eine definierte innere Sollfehlfeld (4.4) in dem mindestens einen schubweichen Bereich (4.2) bei einer Krafteinwirkung einen Riss ausbilden, der durch den mindestens einen schubsteifen Bereich (4.1) gestoppt wird.

4. Faserverbundwerkstoffprofil nach einem der Ansprüche 1 bis 3, **dadurch gekennzeichnet, dass** die Gesamtverformung des Faserverbundwerkstoffprofils (4) über einen Kraft-Weg-Verlauf einstellbar ist.

5. Faserverbundwerkstoffprofil nach Anspruch 4, **dadurch gekennzeichnet, dass** der Kraft-Weg-Verlauf durch Variieren der Wandstärke des Faserverbundwerkstoffprofils (4) und/oder der Faserorientierung und/oder der Abstände der schubsteifen Bereiche (4.1) und/oder der schubweichen Bereiche (4.2) anpassbar ist.

6. Faserverbundwerkstoffprofil nach einem der Ansprüche 1 bis 5, **dadurch gekennzeichnet, dass** das Faserverbundwerkstoffprofil (4) als geschlossenes Hohlprofil ausgeführt ist.

7. Scheibenrahmen für ein Kraftfahrzeug, **dadurch gekennzeichnet, dass** der Scheibenrahmen mindestens ein Faserverbundwerkstoffprofil (4) nach einem der Ansprüche 1 bis 6 umfasst.

8. Scheibenrahmen nach Anspruch 8, **dadurch gekennzeichnet, dass** das mindestens eine Faserverbundwerkstoffprofil (4) so ausgerichtet ist, dass es eine maximale Bruchdehnung gegen eine zu erwartende Krafteinwirkung (F) aufweist.

## Claims

1. Fibre composite material profile, in particular for a window frame (2) of a motor vehicle (1), with at least one shear-resistant region (4.1) and at least one free-to-shear region (4.2) which has at least one defined inner predetermined defective spot (4.3) and/or at least one defined inner predetermined defective field, **characterized in that** the at least one shear-resistant region (4.1) and the at least one free-to-shear region (4.2) are arranged in such a manner that the fibres in the at least one free-to-shear region (4.2) have orientation angles of approximately 0° and the fibres in the at least one shear-resistant region (4.1) have orientation angles of approximately +/-45° in order to specify an overall deformation of the fibre composite material profile (4) upon an application of force (F) so as to increase the failure strain.

2. Fibre composite material profile according to Claim 1, **characterized in that** the shear-resistant regions (4.1) and the free-to-shear regions (4.2) are arranged in an alternating manner.

3. Fibre composite material profile according to Claim 1 or 2, **characterized in that**, upon an application of force, the at least one defined inner predetermined defective spot (4.3) and/or the at least one defined inner predetermined defective field (4.4) in the at least one free-to-shear region (4.2) form/forms a crack which is stopped by the at least one shear-resistant region (4.1).

4. Fibre composite material profile according to one of Claims 1 to 3, **characterized in that** the overall deformation of the fibre composite material profile (4) can be adjusted via a force-displacement profile.

5. Fibre composite material profile according to Claim 4, **characterized in that** the force-displacement profile can be adapted by varying the wall strength of the fibre composite material profile (4) and/or the fibre orientation and/or the spacings of the shear-resistant regions (4.1) and/or of the free-to-shear regions (4.2).

6. Fibre composite material profile according to one of Claims 1 to 5, **characterized in that** the fibre composite material profile (4) is designed as a closed hollow profile.

7. Motor vehicle window frame, **characterized in that** the window frame comprises at least one fibre composite material profile (4) according to one of Claims 1 to 6.

8. Window frame according to Claim 7, **characterized in that** the at least one fibre composite material profile (4) is oriented in such a manner that it has a maximum failure strain against an anticipated application of force (F).

## Revendications

1. Profilé en matériau composite renforcé par des fibres, notamment pour un cadre de vitre (2) d'un véhicule automobile (1) comprenant au moins une région rigide en poussée (4.1) et au moins une région flexible en poussée (4.2), qui présente au moins un point de défaillance de consigne interne défini (4.3) et/ou au moins un champ de défaillance de consigne interne défini, **caractérisé en ce que** l'au moins une région rigide en poussée (4.1) et l'au moins une région flexible en poussée (4.2) sont disposées de telle sorte que les fibres dans l'au moins une région flexible en poussée (4.2) présentent un angle d'orientation d'environ 0° et que les fibres dans l'au moins une région rigide en poussée (4.1) présentent un angle d'orientation d'environ +/- 45°, afin de prédéfinir, dans le cas d'une application de force (F) pour augmenter l'allongement à la rupture, une déformation totale du profilé en matériau composite renforcé par des fibres (4).

2. Profilé en matériau composite renforcé par des fibres selon la revendication 1, **caractérisé en ce que** les régions rigides en poussée (4.1) et les régions flexibles en poussée (4.2) sont disposées en alternance.

3. Profilé en matériau composite renforcé par des fibres selon la revendication 1 ou 2, **caractérisé en ce que** l'au moins un point de défaillance de consigne interne défini (4.3) et/ou l'au moins un champ de défaillance de consigne interne défini (4.4) constituent dans l'au moins une région flexible en poussée (4.2) une déchirure lors de l'application d'une force, qui est arrêtée par l'au moins une région rigide en poussée (4.1).

4. Profilé en matériau composite renforcé par des fibres selon l'une quelconque des revendications 1 à 3, **caractérisé en ce que** la déformation totale du profilé en matériau composite renforcé par des fibres (4) peut être ajustée par le biais d'une courbe force-distance.

5. Profilé en matériau composite renforcé par des fibres selon la revendication 4, **caractérisé en ce que** la courbe force-distance peut être adaptée en faisant varier l'épaisseur de paroi du profilé en matériau composite renforcé par des fibres (4) et/ou l'orientation des fibres et/ou les distances des régions rigides en poussée (4.1) et/ou des régions flexibles en poussée (4.2).

6. Profilé en matériau composite renforcé par des fibres selon l'une quelconque des revendications 1 à 5, **caractérisé en ce que** le profilé en matériau composite renforcé par des fibres (4) est réalisé sous forme de profilé creux fermé.

7. Cadre de vitre pour un véhicule automobile, **caractérisé en ce que** le cadre de vitre comprend au moins un profilé en matériau composite renforcé par des fibres (4) selon l'une quelconque des revendications 1 à 6.

8. Cadre de vitre selon la revendication 7, **caractérisé en ce que** l'au moins un profilé en matériau composite renforcé par des fibres (4) est orienté de telle sorte qu'il présente un allongement à la rupture maximal vis-à-vis d'une application de force attendue (F).
